# EUROPEAN PATENT APPLICATION

(11) **EP 1 079 580 A2**
(43) Date of publication of application: **28.02.2001**
(21) Application number: 00118305.2
(22) Date of filing: 23.08.2000
(51) Int. Cl.: H04L 29/02, H04L 29/10

(54) **Method and apparatus for avoiding loop connection**

(30) Priority: 23.08.1999 JP 23548499; 23.08.1999 JP 23548599
(71) Applicant: SANYO ELECTRIC CO., LTD., Moriguchi-shi, Osaka (JP)
(72) Inventor: Matsuda, Jiro, Sanyo Electric Co., Ltd., Moriguchi-shi, Osaka (JP); Katayama, Ryu, Sanyo Electric Co., Ltd., Moriguchi-shi, Osaka (JP)
(74) Representative: Glawe, Delfs, Moll & Partner

(57) **Abstract**

An apparatus equipped with a digital interface comprises means for notifying, when the digital interface detects that the apparatus equipped with the digital interface is loop-connected in the process of performing tree identification processing, a user that the apparatus is loop-connected.

## Description

### BACKGROUND OF THE INVENTION

### Field of the Invention

The present invention relates to an apparatus equipped with a digital interface, which is used for connecting a plurality of nodes in a daisy chain and/or a branch and does not allow a loop, a loop status notifying method in the apparatus equipped with a digital interface, and a loop connection avoiding method in the apparatus equipped with a digital interface.

### Description of Prior Art

As digital interfaces for connecting a digital VCR (Video Cassette Recorder), a DVD (Digital Versatile Disc), a video camera, a printer, or the like to a PC (Personal Computer), IEEE 1394 high-speed serial bus interfaces have been paid attention to in recent years.

When the IEEE 1394 is used, nodes are connected in a daisy chain and a branch. A connection structure of the nodes is automatically recognized and set. The setting is performed by performing bus initialization, tree identification, and self-node ID identification in this order.

### (1) Bus Initialization

When the power supply is turned on and when a node is added to a bus, a bus reset signal is fed to all connected apparatuses. Consequently, all information relating to a connection structure of nodes are cleared. At the time point of node initialization, each of nodes has only information indicating whether the node itself is a branch node (a node connected to two or more nodes), a leaf node (a node connected to only one node), or is in a non-connected state.

### (2) Tree Identification

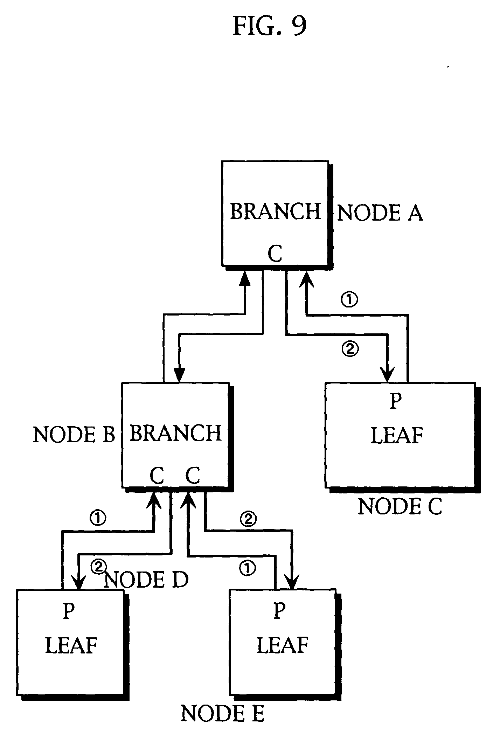

A signal (parent notify) indicating notification from a child node to a parent node is first fed to branch nodes from all leaf nodes, as indicated by ① in Fig. 9. The node which has received the parent notify signal recognizes its port as a child port C, and feeds a signal (child notify) indicating notification from a parent node to a child node, as indicated by ② in Fig. 9. The node which has received the child notify signal recognizes its port as a parent port P, and recognizes that its own role is terminated. Consequently, a parent relationship between the nodes is determined.

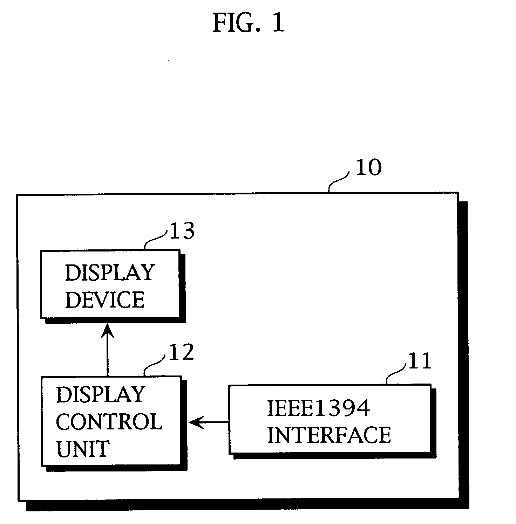

At this time point, a node A and a node B recognize that they respectively have ports which are connected to each other but are not determined as a child port or a parent port (they respectively have ports which are connected to each other but receive neither a parent notify signal nor a child notify signal), and feed parent notify signals to each other, as indicated by ① and ② in Fig. 1.

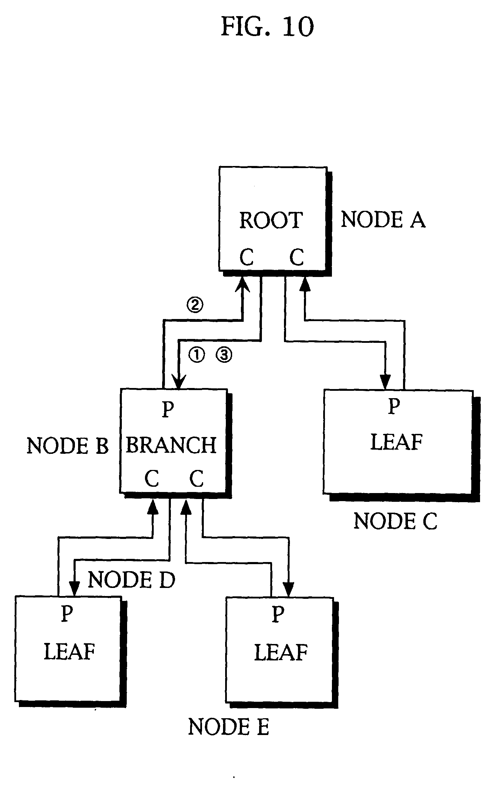

The nodes A and B respectively set, when they recognize that they receive the parent notify signals, independent time periods (Timers). The node at which the set time period has elapsed first feeds the parent notify signal to the other node. The node which has first received the parent notify signal, the node A in this example, is a parent node (a root), and feeds a child notify signal to the other node (the node B), as indicated by ③ in Fig. 10.

When a certain node is loop-connected, the node does not receive a parent notify signal at all its ports excluding one port within a certain time period at the time of tree identification. Accordingly, it is detected that the node is loop-connected. That is, the node which is loop-connected and the ports constituting factors of the loop connection are recognized.

### (3) Self-node ID Identification

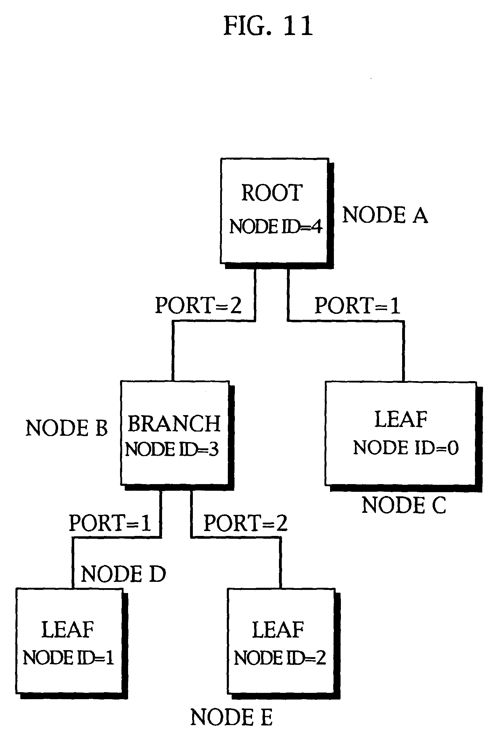

After the tree identification, self-node IDs are identified. In a method of determining self-node IDs, a node ID assigned to a leaf (a node C) at a terminal end of a lowest-numbered port of a root is zero, and the node ID is broadcast to nodes other than the node C as a self-node ID = 0, as shown in Fig. 11. Ports of the root are subjected to this operation in ascending order of their numbers. Each of the nodes other than the node C broadcasts the number of node IDs which have received from all the other nodes at the time point of the broadcasting as a self-node ID.

However, a network topology using the IEEE 1394 is limited to a daisy chain, a branch, or their combination. When a loop exists on the topology, a node ID cannot be identified. Accordingly, the entire network does not function. When a loop connection is erroneously made, therefore, a user must find a loop-connected portion, to cancel a loop.

When a loop connection is erroneously made in a network to which a lot of apparatuses are connected, however, it is difficult to find a loop-connected portion.

### SUMMARY OF THE INVENTION

An object of the present invention is to provide an apparatus equipped with a digital interface, which can notify a user that a loop connection exists, and a loop status notifying method in the apparatus.

Another object of the present invention is to provide an apparatus equipped with a digital interface, which can notify a user that a loop connection exists and of ports constituting factors of a loop, and a loop status notifying method in the apparatus.

Still another object of the present invention is to provide an apparatus equipped with a digital interface, which can cause a network to normally function even when a loop connection exists, and a loop connection avoiding method in the apparatus.

A first apparatus equipped with a digital interface according to the present invention is an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected, characterized by comprising notification means for notifying, when the digital interface detects that the apparatus equipped with the digital interface is loop-connected in the process of performing the tree identification processing, a user that the apparatus is loop-connected.

An example of the notification means is one comprising a display device, and causing, when the digital interface detects that the apparatus equipped with the digital interface is loop-connected, the display device to indicate that the apparatus is loop-connected.

An example of the notification means is one comprising a lamp, and turning on the lamp when the digital interface detects that the apparatus equipped with the digital interface is loop-connected.

A second apparatus equipped with a digital interface according to the present invention is an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, characterized by comprising notification means for notifying, when the digital interface detects that the apparatus equipped with the digital interface is loop-connected and the numbers of the ports constituting factors of the loop in the process of performing the tree identification processing, a user that the apparatus is loop-connected and of the numbers of the ports constituting factors of the loop.

An example of the notification means is one comprising a display device, and causing, when the digital interface detects that the apparatus equipped with the digital interface is loop-connected and the numbers of the ports constituting factors of the loop, the display device to indicate that the apparatus is loop-connected and the numbers of the ports constituting factors of the loop.

An example of the notification means is one comprising lamps respectively corresponding to the numbers of the ports, and turning on the lamps corresponding to the numbers of the ports constituting factors of the loop when the digital interface detects that the apparatus equipped with the digital interface is loop-connected and the numbers of the ports constituting factors of the loop.

A first loop status notifying method in an apparatus equipped with a digital interface according to the present invention is a loop status notifying method in an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected, characterized in that the apparatus equipped with the digital interface is provided with notification means for notifying, when the digital interface detects that the apparatus equipped with the digital interface is loop-connected in the process of performing the tree identification processing, a user that the apparatus is loop-connected.

An example of the notification means is one comprising a display device, and causing, when the digital interface detects that the apparatus equipped with the digital interface is loop-connected, the display device to indicate that the apparatus is loop-connected.

An example of the notification means is one comprising a lamp, and turning on the lamp when the digital interface detects that the apparatus equipped with the digital interface is loop-connected.

A second loop status notifying method in an apparatus equipped with a digital interface according to the present invention is a loop status notifying method in an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, characterized in that the apparatus equipped with the digital interface is provided with notification means for notifying, when the digital interface detects that the apparatus equipped with the digital interface is loop-connected and the numbers of the ports constituting factors of the loop in the process of performing the tree identification processing, a user that the apparatus is loop-connected and of the numbers of the ports constituting factors of the loop.

An example of the notification means is one comprising a display device, and causing, when the digital interface detects that the apparatus equipped with the digital interface is loop-connected and the numbers of the ports constituting factors of the loop, the display device to indicate that the apparatus is loop-connected and the numbers of the ports constituting factors of the loop.

An example of the notification means is one comprising lamps respectively corresponding to the numbers of the ports, and turning on the lamps corresponding to the numbers of the ports constituting factors of the loop when the digital interface detects that the apparatus equipped with the digital interface is loop-connected and the numbers of the ports constituting factors of the loop.

A third apparatus equipped with a digital interface according to the present invention is an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, characterized by comprising means for bringing, when the digital interface detects that the apparatus equipped with the digital interface is loop-connected in the process of performing the tree identification processing, any one of the plurality of ports constituting factors of the loop into a non-connected state; and means for causing, after any one of the plurality of ports constituting factors of the loop is brought into a non-connected state, the digital interface to perform the bus initialization processing in order to cause the digital interface to recognize and set the connection structure of the nodes again.

A loop connection avoiding method in an apparatus equipped with a digital interface according to the present invention is a loop connection avoiding method in an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, characterized by comprising the steps of bringing, when the digital interface detects that the apparatus equipped with the digital interface is loop-connected in the process of performing the tree identification processing, any one of the plurality of ports constituting factors of the loop into a non-connected state; and causing, after any one of the plurality of ports constituting factors of the loop is brought into a non-connected state, the digital interface to perform the bus initialization processing in order to cause the digital interface to recognize and set the connection structure of the nodes again.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the configuration of an apparatus equipped with an IEEE 1394 interface;
Fig. 2 is a schematic view showing the configuration of a network including the apparatus shown in Fig. 1;
Fig. 3 is a block diagram showing the configuration of an apparatus equipped with an IEEE 1394 interface;
Fig. 4 is a flow chart showing the procedure for recognition and setting processing of a connection structure of nodes by the IEEE 1394 interface and a control unit;
Fig. 5 is a schematic view showing an example in which two apparatuses 41 and 42 are loop-connected;
Figs. 6(a), 6(b) and 6(c) are schematic views showing an example in which a loop connection is avoided when two apparatuses 41 and 42 are loop-connected, and three ports constituting factors of a loop exist in the apparatus 41;
Figs. 7(a), 7(b) and 7(c) are schematic views showing an example in which a loop connection is avoided when three apparatuses 41, 42, and 43 are loop-connected, and four ports constituting factors of a loop exist in the apparatus 42;
Figs. 8(a), 8(b) and 8(c) are schematic views showing an example in which a loop connection is avoided when four apparatuses 41, 42, 43, and 44 are loop-connected, and three ports constituting factors of a loop exist in the apparatus 42;
Fig. 9 is a schematic view for explaining a method of identifying a tree structure of nodes;
Fig. 10 is a schematic view for explaining a method of identifying a tree structure of nodes; and
Fig. 11 is a schematic view for explaining a method of setting node IDs.

### DETAILED DESCRIPTION OF THE PREFERRED EMBODIMENTS

Referring now to the drawings, embodiments of the present invention will be described.

### [1] Description of First Embodiment

Fig. 1 illustrates the configuration of an apparatus equipped with an IEEE 1394 interface.

An apparatus 10 has a loop status notifying function. The apparatus 10 is a digital VCR, for example, and comprises a display device 13. The apparatus 10 is provided with an IEEE 1394 interface 11 composed of an LSI (Large-Scale Integrated Circuit) for establishing IEEE 1394 communication, and a display control unit 12 for causing the display device 13 to display a message relating to a loop connection on the basis of a loop detection signal or the like from the IEEE 1394 interface 11.

When the apparatus 10 is loop-connected on a network, the IEEE 1394 interface 11 has the function of detecting that the apparatus 10 is loop-connected and the numbers of ports constituting factors of a loop in tree identification processing, as is well-known.

When the IEEE 1394 interface 11 detects that the apparatus 10 is loop-connected and the numbers of the ports constituting factors of the loop, the contents of the detection are sent to the display control unit 12.

The display control unit 12 causes the display device 13 to display a message indicating that the apparatus 10 is loop-connected and the numbers of the ports constituting factors of the loop when the contents of the detection are sent from the IEEE 1394 interface 11.

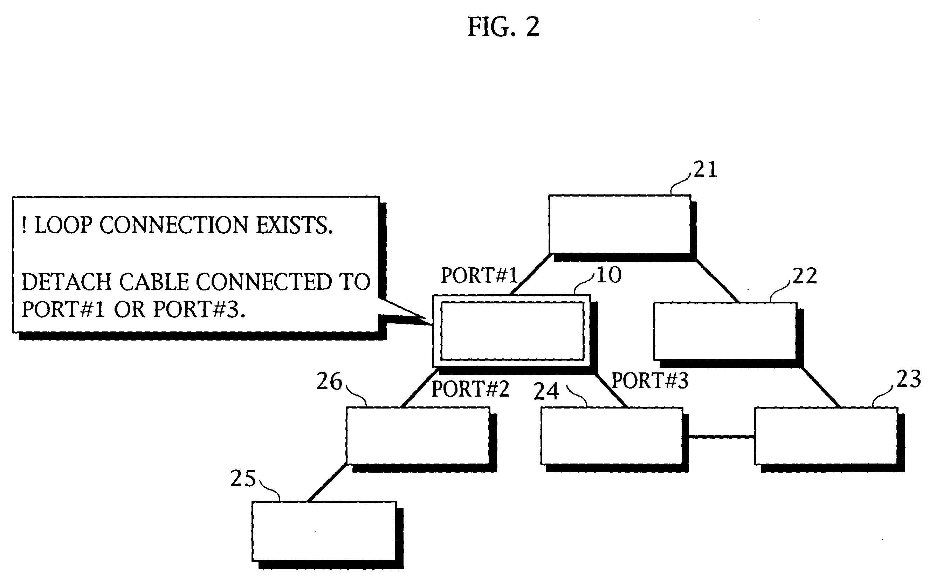

Fig. 2 illustrates a network using IEEE 1394.

In the network, six apparatuses 21 to 26 each equipped with an IEEE 1394 interface are connected by a bus in addition to the apparatus 10 having a loop status notifying function. In this example, the apparatus 10 and the four apparatuses 21 to 24 are in a loop-connected state.

In the network in which such a loop connection exists, the IEEE 1394 interface 11 in the apparatus 10 detects that the apparatus 10 is loop-connected and ports #1 and #3 constituting factors of a loop in tree identification processing. Accordingly, the contents of the detection are sent to the display control unit 12.

The display control unit 12 causes the display device 13 to display a message "A loop connection exists. Detach a cable connected to a port #1 or a port #3" when the contents of the detection are sent from the IEEE 1394 interface 11.

A user can know that a loop connection exists by the display, and can know a method of canceling the loop connection. Accordingly, the loop connection can be easily canceled.

A message only indicating that a loop connection exists may be displayed on the display device 13. Further, lamps respectively corresponding to the ports may be provided in place of the display device 13, to turn on the lamps corresponding to the ports constituting factors of the loop. Alternatively, one lamp may be provided in place of the display device 13, to turn on the lamp when it is detected that the apparatus is loop-connected.

### [2] Description of Second Embodiment

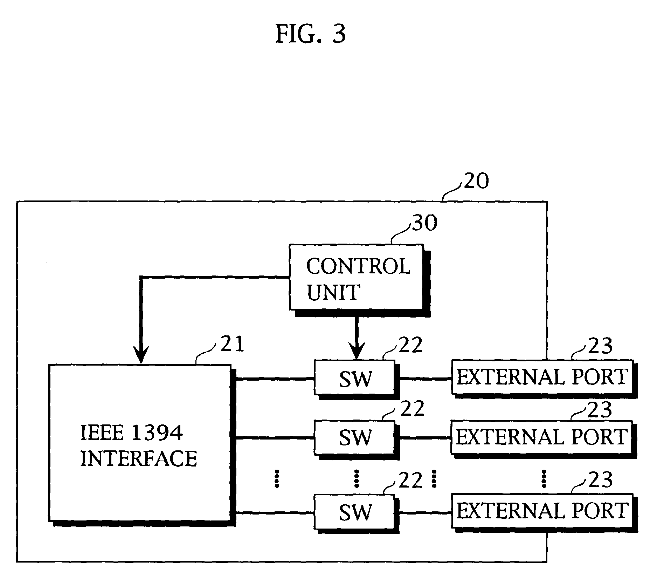

Fig. 3 illustrates the configuration of an apparatus equipped with an IEEE 1394 interface.

An apparatus 20 has a loop connection avoiding function. The apparatus 20 is equipped with an IEEE 1394 interface 21. The IEEE 1394 interface 21 is connected to a plurality of external ports 23 through a plurality of switches (SW) 22. The apparatus 20 is provided with a control unit 30 for controlling the plurality of switches (SW) 22 and the IEEE 1394 interface 21.

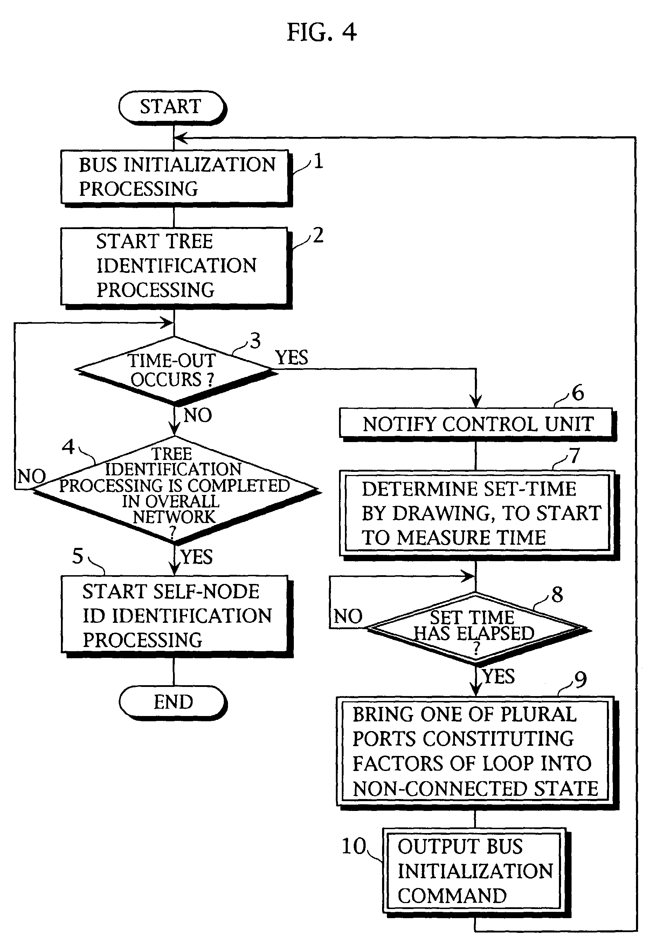

Fig. 4 shows the procedure for recognition and setting processing of a connection structure of nodes by the IEEE 1394 interface 21 and the control unit 30.

In Fig. 4, steps 1 to 6 show processing by the IEEE 1394 interface 21, and steps 7 to 10 show processing by the control unit 30.

When the power supply is turned on or when a node is added to a bus, bus initialization processing is performed by the IEEE 1394 interface 21 (step 1). Tree identification processing is started by the IEEE 1394 interface 21 (step 2).

When the apparatus 20 is loop-connected, a time-out occurs in the tree identification processing. Consequently, the IEEE 1394 interface 21 recognizes that the apparatus 20 is loop-connected. In this case, the IEEE 1394 interface 21 recognizes ports constituting factors of a loop.

When a time-out occurs due to the loop-connection of the apparatus 20 (YES at step 3), the control unit 30 is notified that the apparatus 20 is loop-connected and of the numbers of the ports constituting factors of the loop from the IEEE 1394 interface 21 (step 6).

The control unit 30 determines a set time period by drawing processing, that is, determines a set time period at random when it receives the notification, to start to measure the set time period (step 7). When the determined set time period has elapsed (step 8), any one of the plurality of ports constituting factors of the loop is brought into a non-connected state by turning off the switch 22 corresponding to the port (step 9).

Thereafter, the control unit 30 outputs to the IEEE 1394 interface 21 a bus initialization command for causing the IEEE 1394 interface 21 to perform bus initialization processing again (step 10). The IEEE 1394 interface 21 performs the processing at the step 1 and the subsequent steps again when it receives the bus initialization command from the control unit 30.

When the tree initialization processing is started at the step 2, and the tree initialization processing is then completed in the overall network (YES at step 4), self-node ID identification processing is started (step 5).

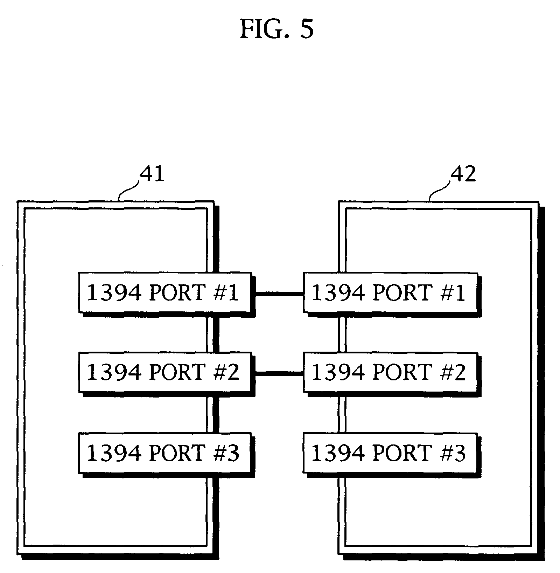

Description is made of a case where two apparatuses 41 and 42 are loop-connected, as shown in Fig. 5, for example. The two apparatuses 41 and 42 shall have a loop releasing function.

In this example, first ports #1 and second ports #2 in both the apparatuses 41 and 42 are respectively connected to each other by cables, thereby causing a loop status.

In the tree identification processing in the recognition and setting processing of the connection structure of the nodes which is performed by the IEEE 1394 interface carried in each of the apparatuses 41 and 42, a time-out occurs.

Therefore, a set time period is determined by drawing for each of the apparatuses 41 and 42. The set time period determined by the apparatus 41 shall be shorter than the set time period determined by the apparatus 42.

In the apparatus 41, either one of the first port #1 and the second port #2 constituting factors of a loop (for example, the first port #1) is brought into a non-connected state when the set time period determined by the drawing has elapsed. Thereafter, a bus is initialized, and the tree identification processing is performed again. In the tree identification processing, it is recognized that the first port #1 in the apparatus 41 is in a non-connected state, so that the loop is not detected, thereby normally completing the tree identification processing.

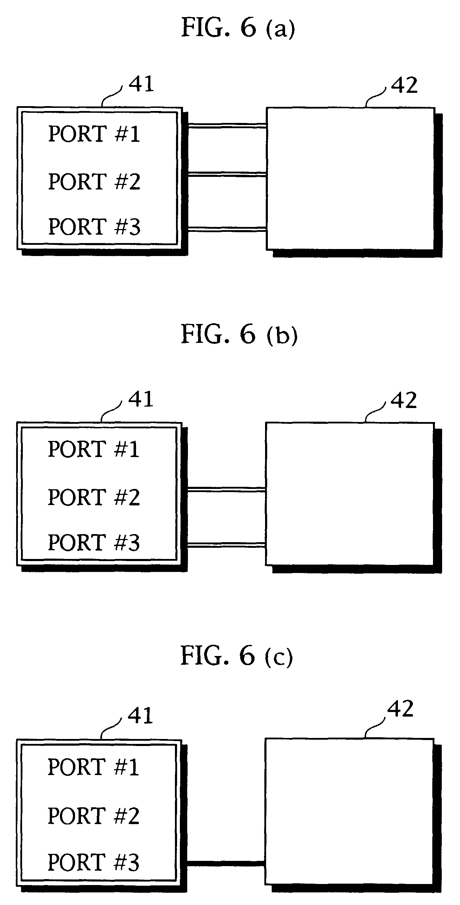

Figs. 6(a), 6(b) and 6(c) illustrate an example in which a loop connection is avoided when two apparatuses 41 and 42 are loop-connected, and three ports constituting factors of a loop exist in the apparatus 41. Here, only the apparatus 41 shall have a loop connection avoiding function.

From a state shown in Fig. 6 (a), one port #1 out of three ports #1, #2, and #3 constituting factors of the loop is brought into a non-connected state, as shown in Fig. 6 (b), by the first cycle comprising the steps 1 to 3 and 6 to 10 shown in Fig. 4.

The one port #2 out of the two ports #2 and #3 constituting factors of the loop is brought into a non-connected state, as shown in Fig. 6 (c), by the second cycle comprising the steps 1 to 3 and 6 to 10.

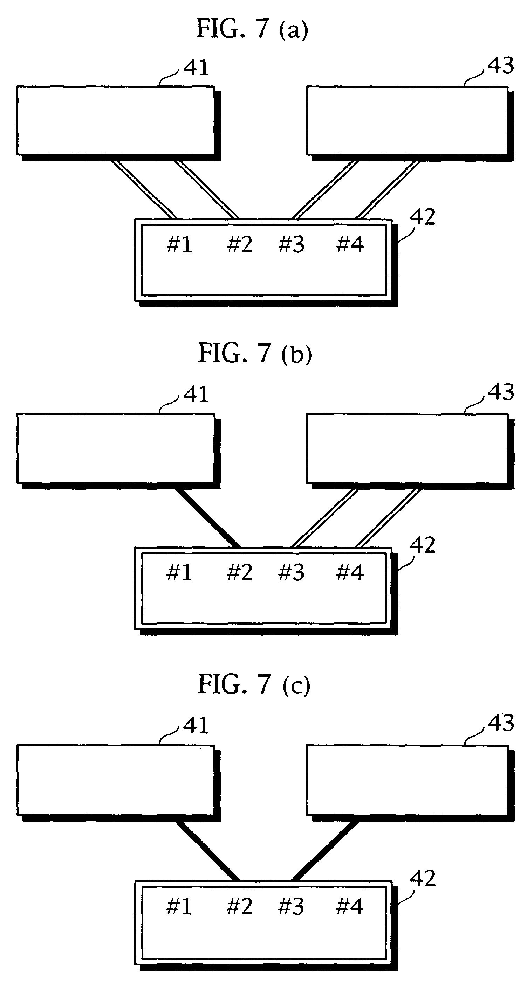

Figs. 7(a), 7(b) and 7(c) show an example in which a loop connection is avoided when three apparatuses 41, 42, and 43 are loop-connected, and four ports constituting factors of a loop exist in the apparatus 42. Here, only the apparatus 42 shall have a loop connection avoiding function.

From a state shown in Fig. 7 (a), one port #1 out of four ports #1, #2, #3, and #4 constituting factors of the loop is brought into a non-connected state, as shown in Fig. 7 (b), by the first cycle comprising the steps 1 to 3 and 6 to 10 shown in Fig. 4.

The one port #4 out of the two ports #3 and #4 constituting factors of the loop is brought into a non-connected state, as shown in Fig. 7 (c), by the second cycle comprising the steps 1 to 3 and 6 to 10.

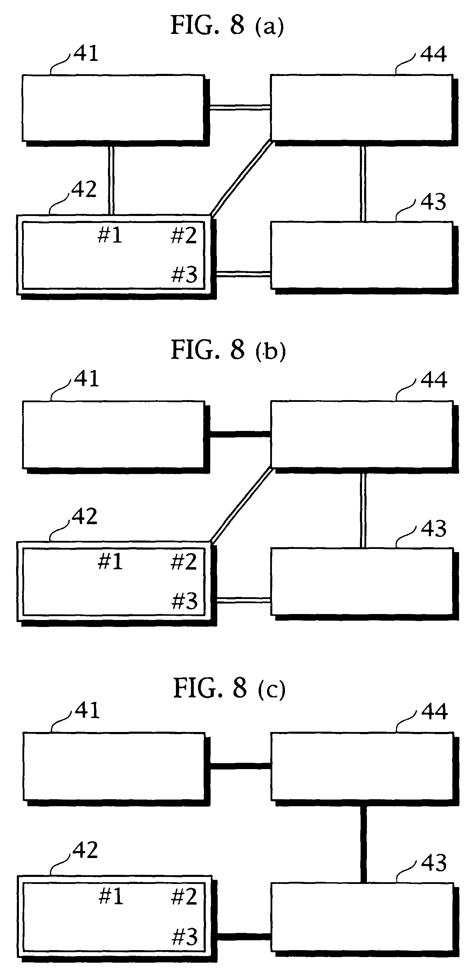

Figs. 8(a), 8(b) and 8(c) show an example in which a loop connection is avoided when four apparatuses 41, 42, 43, and 44 are loop-connected, and three ports constituting factors of a loop exist in the apparatus 42. Here, only the apparatus 42 shall have a loop connection avoiding function.

From a state shown in Fig. 8 (a), one port #1 out of three ports #1, #2, and #3 constituting factors of the loop is brought into a non-connected state, as shown in Fig. 8 (b), by the first cycle comprising the steps 1 to 3 and 6 to 10 shown in Fig. 4.

The one port #2 out of the two ports #2 and #3 constituting factors of the loop is brought into a non-connected state, as shown in Fig. 8 (c), by the second cycle comprising the steps 1 to 3 and 6 to 10.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected, comprising
notification means for notifying, when the digital interface detects that the apparatus equipped with the digital interface is loop-connected in the process of performing the tree identification processing, a user that the apparatus is loop-connected.

2. The apparatus according to claim 1, wherein
the notification means comprises a display device, and causes, when the digital interface detects that the apparatus equipped with the digital interface is loop-connected, the display device to indicate that the apparatus is loop-connected.

3. The apparatus according to claim 1, wherein
the notification means comprises a lamp, and turns on the lamp when the digital interface detects that the apparatus equipped with the digital interface is loop-connected.

4. An apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, comprising
notification means for notifying, when the digital interface detects that the apparatus equipped with the digital interface is loop-connected and the numbers of the ports constituting factors of the loop in the process of performing the tree identification processing, a user that the apparatus is loop-connected and of the numbers of the ports constituting factors of the loop.

5. The apparatus according to claim 4, wherein
the notification means comprises a display device, and causes, when the digital interface detects that the apparatus equipped with the digital interface is loop-connected and the numbers of the ports constituting factors of the loop, the display device to indicate that the apparatus is loop-connected and the numbers of the ports constituting factors of the loop.

6. The apparatus according to claim 4, wherein
the notification means comprises lamps respectively corresponding to the numbers of the ports, and turns on the lamps corresponding to the numbers of the ports constituting factors of the loop when the digital interface detects that the apparatus equipped with the digital interface is loop-connected and the numbers of the ports constituting factors of the loop.

7. A loop status notifying method in an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected, wherein
the apparatus equipped with the digital interface is provided with notification means for notifying, when the digital interface detects that the apparatus equipped with the digital interface is loop-connected in the process of performing the tree identification processing, a user that the apparatus is loop-connected.

8. The method according to claim 7, wherein
the notification means comprises a display device, and causes, when the digital interface detects that the apparatus equipped with the digital interface is loop-connected, the display device to indicate that the apparatus is loop-connected.

9. The method according to claim 7, wherein
the notification means comprises a lamp, and turns on the lamp when the digital interface detects that the apparatus equipped with the digital interface is loop-connected.

10. A loop status notifying method in an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, wherein
the apparatus equipped with the digital interface is provided with notification means for notifying, when the digital interface detects that the apparatus equipped with the digital interface is loop-connected and the numbers of the ports constituting factors of the loop in the process of performing the tree identification processing, a user that the apparatus is loop-connected and of the numbers of the ports constituting factors of the loop.

11. The method according to claim 10, wherein
the notification means comprises a display device, and causes, when the digital interface detects that the apparatus equipped with the digital interface is loop-connected and the numbers of the ports constituting factors of the loop, the display device to indicate that the apparatus is loop-connected and the numbers of the ports constituting factors of the loop.

12. The apparatus according to claim 10, wherein
the notification means comprises lamps respectively corresponding to the numbers of the ports, and turns on the lamps corresponding to the numbers of the ports constituting factors of the loop when the digital interface detects that the apparatus equipped with the digital interface is loop-connected and the numbers of the ports constituting factors of the loop.

13. An apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, comprising:
means for bringing, when the digital interface detects that the apparatus equipped with the digital interface is loop-connected in the process of performing the tree identification processing, any one of the plurality of ports constituting factors of the loop into a non-connected state; and
means for causing, after any one of the plurality of ports constituting factors of the loop is brought into a non-connected state, the digital interface to perform the bus initialization processing in order to cause the digital interface to recognize and set the connection structure of the nodes again.

14. A loop connection avoiding method in an apparatus equipped with a digital interface, which is used for connecting a plurality of nodes in a daisy chain and/or a branch and does not allow a loop, comprising means for the digital interface performing, when the power supply is turned on or when a node is added to a bus, bus initialization processing, tree identification processing, and self-node ID identification processing in this order, to automatically recognize and set a connection structure of nodes, and means for detecting, when the node is loop-connected, that the node is loop-connected and the numbers of ports constituting factors of the loop, comprising the steps of:
bringing, when the digital interface detects that the apparatus equipped with the digital interface is loop-connected in the process of performing the tree identification processing, any one of the plurality of ports constituting factors of the loop into a non-connected state; and
causing, after any one of the plurality of ports constituting factors of the loop is brought into a non-connected state, the digital interface to perform the bus initialization processing in order to cause the digital interface to recognize and set the connection structure of the nodes again.
